# EUROPEAN PATENT SPECIFICATION

(11) **EP 3 266 717 B1**
(45) Date of publication and mention of the grant of the patent: **03.06.2020**
(21) Application number: 17180223.4
(22) Date of filing: 07.07.2017
(51) Int. Cl.: B64D 47/04, B64D 47/06, B64C 23/06, B64D 47/02

(54) **A WINGTIP DEVICE, AN AIRCRAFT HAVING A WINGTIP DEVICE AND A METHOD OF INTEGRATING AN AIRCRAFT LIGHT INTO A WINGTIP DEVICE**
EINE FLÜGELSPITZEVORRICHTUNG, EIN FLUGZEUG MIT EINER FLÜGELSPITZEVORRICHTUNG UND EIN VERFAHREN ZUR INTEGRATION EINES FLUGZEUGLICHTES IN EINE FLÜGELSPITZEVORRICHTUNG
DISPOSITIF D'AILETTES, AERONEF COMPRENANT UN DISPOSITIF D'AILETTES ET PROCEDE D'INTEGRATION D'UNE LUMIERE D'AERONEFS DANS UN DISPOSITIF D'AILETTES

(30) Priority: 07.07.2016 GB 201611812
(43) Date of publication of application: 10.01.2018
(73) Proprietor: Airbus Operations Limited, Bristol BS34 7PA (GB)
(72) Inventor: MEISNER, Anthony, Filton, Bristol BS34 7PA (GB)
(74) Representative: Abel & Imray

(56) References cited:
- EP-A1- 0 122 790
- CN-U- 201 999 199
- FR-B1- 2 860 493
- US-A1- 2012 312 928
- US-A1- 2013 051 044

## Description

### BACKGROUND OF THE INVENTION

The present invention concerns aircraft lights. More particularly, but not exclusively, this invention concerns the inclusion of an aircraft light in a wingtip device and an aircraft including such a wingtip device. The invention also concerns a method of integrating an aircraft light with a wingtip device.

Aircraft may include a number of lights for navigation purposes, or to illuminate various elements of the aircraft and/or its surroundings. Depending on the purpose of the light there may be a need to position a light within certain regions of the aircraft. For example, rear-facing wing lights would typically need to be located near the trailing edge of the wing in order that the light cone produced by such a light can extend rearwards without being obstructed by the aircraft structure.

Drag reduction is a key element of the increased efficiency achieved by modern aircraft. It is therefore desirable that the additional drag generated by an aircraft light is reduced wherever possible. In some regions of the aircraft it may be possible locate an aircraft light within a recess formed in the structure of the aircraft. For example, forward facing lights may be recessed into the leading edge of the wing. However, in some regions of the aircraft, for example at the relatively thin trailing-edge of the wing, there may be insufficient space available within the aircraft structure to enable an aircraft light to be recessed. One prior art method of providing an aircraft light in such a region is to mount the light on top of the outer surface of the aircraft, and to cover the light with an additional aerodynamic fairing. However even with such aerodynamic fairings the 'bulge' associated with a light mounted in this way may generate a significant amount of localised drag. It would be advantageous to provide a means of mounting a light on a wing, particularly a rear-facing light, while reducing the resulting drag. FR2860493 discloses an aircraft light incorporated into a wing near to an upwardly extending winglet. US2013/0051044 discloses an aircraft light incorporated into an aircraft wing, with a glazing unit shaped to conform to the shape of the surrounding wing. US2012/0312928 discloses a split winglet with an upwardly extending winglet and a downwardly extending winglet. CN201999199 discloses an aircraft light at the base of an upwardly extending winglet. EP0122790 discloses an aircraft wing and wing-tip arrangement with a light in a fairing.

The present invention seeks to mitigate the above-mentioned problems. Alternatively or additionally, the present invention seeks to provide an improved approach to integrating an aircraft light within a wing.

### SUMMARY OF THE INVENTION

A wingtip device according to claim 1 is provided.

Thus, the present invention comprises positioning the light in the region where the upwardly extending winglet and the downwardly extending winglet intersect. From an aerodynamic perspective, the join between the upwardly extending winglet and the downwardly extending winglet is not 'clean'; that is to say flow in this region may be turbulent, with various airflows interacting, all of which may lead to the generation of drag. In view of the fact that airflow in this region is already non-optimal in terms of drag generation, the additional drag generated by including an aircraft light in this region may be lower than the additional drag generated by placing a faired light in a aerodynamically 'cleaner' region such as the trailing edge. Locating the light at the join may also facilitate the recessing of the light within existing aircraft structure thereby further reducing the drag generated.

The wing tip device may be configured for mounting to the outboard end of a wing. The wing may define a wing plane. An upwardly extending winglet may be defined as a winglet configured to project upwards with respect to the wing plane. A downwardly extending winglet may be defined as a winglet configured to project downwards with respect to the wing plane. The angle between the upwardly extending winglet and downwardly extending winglet at the join may be less than, or equal to, 160 degrees when the aircraft is on the ground. It will be appreciated that the included angle between the upwardly extending winglet and the downwardly extending winglet at the join is important. The winglet may be arranged such that the downwardly extending winglet is configured to offset a span decrease when the wing adopts a flight shape (i.e. the downwardly extending winglet offsets a span reduction of the upwardly extending winglet when the wing undergoes aeroelastic deformation under 1-g loading). The angle between the upwardly extending winglet and the wing plane may be greater than ninety degrees when the aircraft is on the ground. Wingtip devices of this type will be known to the skilled person. An example is disclosed in WO2012/007358.

The join is defined as the region at which the upwardly extending winglet and downwardly extending winglet intersect. The root chord of the downwardly extending winglet may be adjacent to the upwardly extending winglet, for example a lower surface of the upwardly extending winglet at the join. The trailing edge of the upwardly extending winglet may be in line with the trailing edge of the downwardly extending winglet at the join. The trailing edge of the upwardly extending winglet may be coincident or near-coincident with the trailing edge of the downwardly extending winglet at the join. Coincidence or near-coincidence of the trailing edges of the upwardly extending winglet and the downwardly extending winglet is important to avoid the wake of one element impacting on the flow over the other element at the intersection. The upwardly extending winglet may be larger than the downwardly extending winglet. The upwardly extending winglet may be fixed with respect to the downwardly extending winglet.

The upwardly extending winglet and the downwardly extending winglet may each have an aerofoil cross-section. The upwardly extending winglet and downwardly extending winglet may each be relatively thin (i.e. have significantly larger length and width compared to their depth). The join may be where the upwardly extending winglet and downwardly extending winglet significantly deviate from this behaviour (for example where the cross-section becomes thicker, faired, and/or otherwise deviates from the typical characteristics of the upwardly extending winglet and downwardly extending winglet).

There is a gap or void at the join formed between and/or within the upwardly extending winglet and downwardly extending winglet when these are connected together. The join comprises a join void, said void being defined at least in part by the structure of the upwardly extending winglet and at least in part by the structure of the downwardly extending winglet. The join void may be defined (at least in part) by the fixings that connect the upwardly extending winglet and downwardly extending winglet (for example the first attachment feature and the second attachment feature described below). The join void may be defined at least in part by the aerodynamic fairing that fairs the join. The aircraft light may be located within (for example wholly within) the join void. At least part of the aircraft light may be located in the join void. Positioning at least part of the aircraft light within the join void may reduce the drag generated by the aircraft light, by shielding at least part of the aircraft light from the airflow around the wingtip device when the aircraft is in flight.

The aircraft light is located within the void such that only a portion of the housing (for example the transparent portion of the housing) of the light is exposed to the airflow over the wingtip device when the aircraft is in flight. The aircraft light is located in the void such that the outermost surface of the light is substantially flush with the surface of the wingtip device and/or any aerodynamic fairing covering the join.

The downwardly extending winglet may be connected to the upwardly extending winglet via a first attachment feature associated with the upwardly extending winglet, and a second, complementary, attachment feature associated with the downwardly extending winglet such that, in use, the upwardly extending winglet is connected to the downwardly extending winglet via the first and second attachment features. Attachment features may include brackets, holes, recesses, protrusions or other fixings or features. An attachment feature associated with a downwardly extending winglet or upwardly extending winglet may be integrally formed with said upwardly extending winglet or downwardly extending winglet or may be mounted on said downwardly extending winglet or upwardly extending winglet. The first attachment feature may comprise a first bracket mounted on the upwardly extending winglet. The second attachment feature may comprise a second bracket mounted on the downwardly extending winglet. In the case that the upwardly extending winglet is attached to the downwardly extending winglet via first and second brackets, said brackets may define the join void. It may be that the aircraft light is mounted on the wingtip device via the first and/or second attachment features. One or both of the first and second brackets may define a recess configured to receive the aircraft light.

The wingtip device may comprise an aircraft light fitting. The aircraft light may be mounted on the wingtip device, for example the upwardly extending winglet, using the light fitting. As discussed above, the fitting may be a first or second attachment feature, for example a bracket, that also functions to connect the upwardly extending winglet to the downwardly extending winglet. Alternatively, the fitting may be an element that is structurally and/or physically separated from the attachment features. The fitting (for example a bracket) may be located at and/or in the join.

The wingtip device may comprise at least one aerodynamic fairing (or seal) configured to fare the join. The aerodynamic fairing may be integrated into the upwardly extending winglet or the downwardly extending winglet. The aerodynamic fairing may be mounted on the upwardly extending winglet or the downwardly extending winglet and extend over the join. The aerodynamic fairing may be configured to fair at least a portion of the join and at least a portion of the aircraft light. The outer surface of the light (for example the outer portion of the housing) may be flush with the aerodynamic fairing. The fairing may extend around the root of the downwardly extending winglet.

The aircraft light may be mounted on the upwardly extending winglet such that at least part or all of the aircraft light is located in the join between the upwardly extending winglet and the downwardly extending winglet. The aircraft light may be directly connected to the upwardly extending winglet and/or the first attachment feature. Thus, it may be that the aircraft light is connected to the rest of the wingtip device (and aircraft) via the upwardly extending winglet. Attaching the aircraft light to the aircraft via the upwardly extending winglet may facilitate maintenance of the aircraft by allowing for removal and/or replacement of the downwardly extending winglet without the need to remove the aircraft light.

The wingtip device may be configured to provide power to the aircraft light via the upwardly extending winglet. Providing power to the aircraft light via the upwardly extending winglet may further facilitate disconnection of the downwardly extending winglet for maintenance. The upwardly extending winglet may comprise an electrical connector configured to provide a power supply from elsewhere on the aircraft to the aircraft light. The aircraft light may comprise a corresponding connector for receiving a power supply from elsewhere on the aircraft.

The aircraft light may comprise a light source. The light source may be configured to emit visible light, for example white light. The light source may comprise one or more Light Emitting Diodes (LEDs), High Intensity Discharge (HID) bulbs or other bulbs conventionally used on aircraft. The aircraft light may comprise a housing configured to receive the light source and provide a power supply thereto. The housing may comprise at least one transparent region for allowing the transmission of light from the light source to the surroundings. The housing, for example a portion of the housing exposed to the airflow over the wingtip device when the aircraft is in flight, may be shaped to reduce drag generated by airflow over the housing. For example, the housing may be shaped to continue the aerodynamic profile provided by any adjacent structure of the wingtip device, for example the aerodynamic seal.

The aircraft light may be located on the outboard side of the winglet. The aircraft light may be configured to provide a light cone directed away from the main fuselage of the aircraft. The aircraft light may be located in the join at the trailing edge of the device. Thus, the light may be adjacent to the trailing edge of the upwardly extending winglet and/or the downwardly extending winglet. Locating the light adjacent to the trailing edge of the device may provide a wider field of illumination by reducing the proportion of the light cone obstructed by the aircraft structure.

An aerodynamic fairing (or seal) may extend along the join between the upwardly extending winglet and the downwardly extending winglet. In the case that the light is located at the trailing edge of the device, the fairing may extend from the leading edge of the device (for example from the leading edge of the downwardly extending winglet) along the join towards the trailing edge. The fairing may extend along the join to a region adjacent to the aircraft light. The fairing may extend over a portion of an aircraft light located in the join. The fairing may extend around and/or over the aircraft light such that only a portion of the light, for example the transparent portion of the housing of the light, is exposed to the airflow over the wingtip device.

The aircraft light may be an obstruction light. An obstruction light may be defined as a light configured for the primary purpose of illuminating the aircraft surroundings. Thus, an obstruction light may differ from a navigation light which may be defined as a light (the position and type of which is usually mandated by international regulations) configured for the primary purpose of providing information on the position and heading of the aircraft. The wing may comprise one or more navigation lights (for example a white navigation light located towards the aft of the wing) and an obstruction light. The aircraft light may be a rear-facing light and/or outboard facing light. The wingtip device may be configured such that, in use, the light provides a rearward-directed and/or outward-directed light cone. The aircraft light may be configured to provide a light cone having a cone angle greater than 50 degrees, for example greater than 60 degrees, for example 70 degrees, when viewed in plan from above.

The upwardly extending winglet may be connected to the outboard end of the wing. The join between the upwardly extending winglet and the downwardly extending winglet may be at the outboard end of the wing. Alternatively, the join between the upwardly extending winglet and the downwardly extending winglet may be outboard of the outboard end of the wing.

The upwardly extending winglet and the downwardly extending winglet may each have a mean camber line. The mean camber line may be defined as the curve that is equidistance from the two surfaces of the upwardly extending winglet or downwardly extending winglet. The light may be located on the mean camber line of the upwardly extending winglet and/or the downwardly extending winglet. The light may be located on the mean camber line of the downwardly extending winglet at the point closest to the mean camber line of the upwardly extending winglet. The upwardly extending winglet may comprise a transition region having a radius of curvature. The upwardly extending winglet may comprise an upwardly extending portion and a transition portion configured to blend the upwardly extending portion into the wing. The downwardly extending winglet may intersect the upwardly extending winglet at the transition region. Alternatively the upwardly extending winglet may be a curved winglet.

In a second aspect of the invention there is provided an aircraft having a wingtip device according to any previous claim. The aircraft may be a commercial passenger aircraft. The aircraft may be configured to transport more than fifty passengers.

According to a third aspect of the invention there is provided a method of integrating an aircraft light with a wingtip device comprising an upwardly extending winglet according to claim 13.

The aircraft light may be connected to the wingtip device via the upwardly extending winglet. For example the aircraft light may be mounted on the first bracket (if present). The method may comprise leaving the aircraft light in position while the downwardly extending winglet is removed. Providing a wing tip device wherein the aircraft light forms part of the upwardly extending winglet assembly may facilitate maintenance by allowing the downwardly extending winglet to be removed without having to disconnect the light.

The method may comprise providing power to the aircraft light via the upwardly extending winglet.

It will of course be appreciated that features described in relation to one aspect of the present invention may be incorporated into other aspects of the present invention. For example, the method of the invention may incorporate any of the features described with reference to the apparatus of the invention and vice versa.

### DESCRIPTION OF THE DRAWINGS

Embodiments of the present invention will now be described by way of example only with reference to the accompanying schematic drawings of which:
Figure 1 shows a perspective view of a portion of a wingtip device according to a first embodiment of the invention;
Figure 2 shows a close-up of the region labelled A in Figure 1;
Figure 3 shows a rear view of the wingtip device of the first embodiment; and
Figure 4 shows a schematic view of a wingtip device according to a second embodiment.

### DETAILED DESCRIPTION

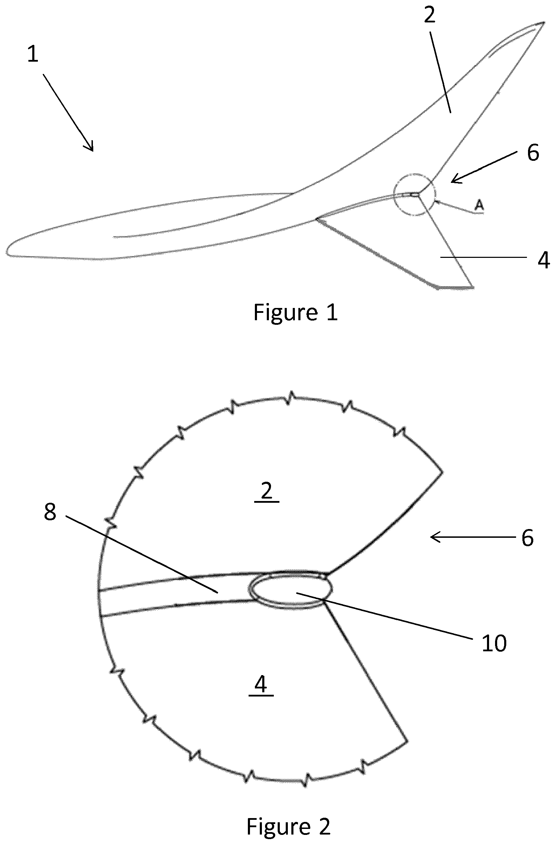

Figure 1 shows a perspective view of a wingtip device 1 in accordance with a first example embodiment of the invention. The wingtip device 1 comprises an upwardly extending winglet (an uplet) 2 and a downwardly extending winglet (a downlet) 4. A proximal end of the downwardly extending winglet 4 intersects the underside of the upwardly extending winglet 2 at a join 6. The join 6 extends along the root chord of the downwardly extending winglet 4, between the downwardly extending winglet 4 and the underside of the upwardly extending winglet 2.

Figure 2 shows a close up view of a region of the join 6 labelled A in Figure 1. A rearward facing obstruction light 10 is located towards the trailing edge of the join 6; that is to say at right hand side of the join 6 in Figure 2. An aerodynamic seal 8 extends along the gap formed between the upwardly extending winglet 2 and downwardly extending winglet 4. The seal 8 extends around the root of the downwardly extending winglet 4 and up to either side of the light 10. The aerodynamic seal 8 therefore fairs the join 6 and part of the light 10.

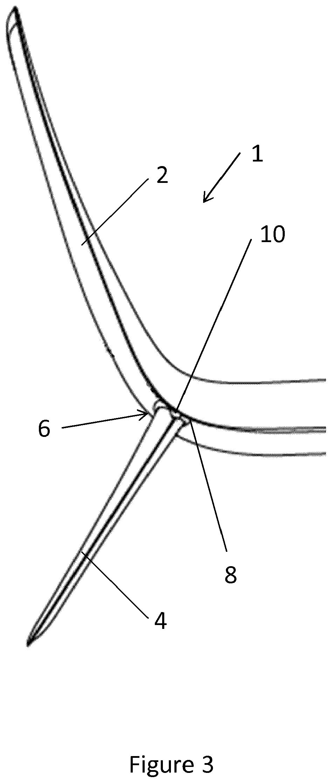

Figure 3 shows a rear view of the wingtip device 1 of the first embodiment. As shown in Figure 3 the light 10 is located on the mean camber line of the downwardly extending winglet 4, at the point which is closest to the mean camber line of the upwardly extending winglet. The angle between the upwardly extending winglet 2 and downwardly extending winglet 4 is around 130 degrees. The angle between the wing plane and the tip of the upwardly extending winglet 2 is around 120 degrees, and the angle between the wing plane and the downwardly extending winglet 4 is around 120 degrees.

As can be seen from Figures 1 to 3, wingtip devices in accordance with the present embodiment may experience less drag as locating the light 10 at the join 6 allows the majority of the body of the light 10 to sit within the join thereby shielding it from the airflow around the wingtip device when the aircraft is in flight. Positioning the obstruction light 10 at the trailing edge of the wingtip device 1 may also allow for a wider light cone due to the lack of other structure to obscure the light.

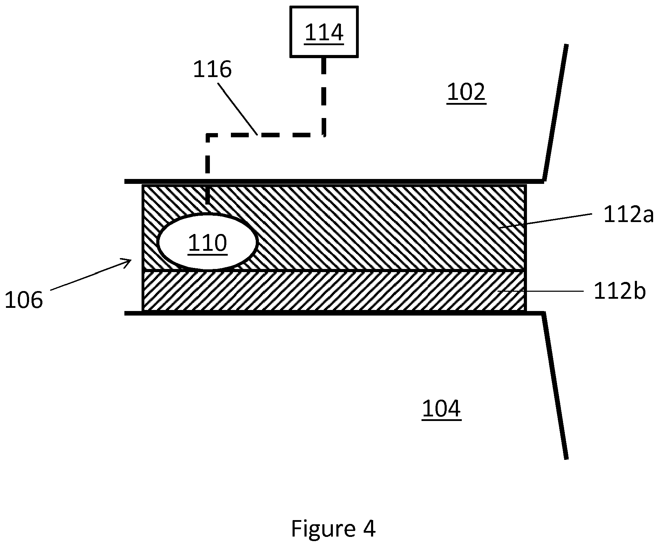

Figure 4 shows a close-up schematic outboard view of part of a wingtip device 101 in accordance with a second example embodiment, again the trailing edge of the wingtip device is on the right-hand side of Figure 4. Only those features of the second embodiment which differ with respect to the first embodiment will be discussed here. Like reference numerals denote like elements. The aerodynamic seal 108 of the second embodiment is not shown in Figure 4 for clarity. In the second embodiment a bracket 112a is mounted on the upwardly extending winglet 102 using fasteners (not shown). Another bracket 112b is mounted on the downwardly extending winglet 104 using fasteners (not shown). The downwardly extending winglet 104 is fixed to the upwardly extending winglet 102 via the brackets 112a, 112b. The upwardly extending winglet bracket 112a defines a recess (not shown), which in contrast to the first embodiment is spaced apart from the trailing edge of the wingtip device 101, and in which a light 110 is located. A dashed line 116 is used in Figure 4 to represent the electrical connection between light 110 and power source 114. The electrical connection is provided to the light 110 via the upwardly extending winglet 102. Accordingly, wingtip devices in accordance with the second embodiment may be disassembled by disconnecting the lower bracket 112b from the upper bracket 112a to remove the downwardly extending winglet 104. The downwardly extending winglet 104 may be removed while the light 110 remains located in upper bracket 112a and without disturbing the electrical connection 116.

In an alternative embodiment (not shown), a separate light fitting is located in the join adjacent to the trailing edge of the wingtip device (i.e. at the right hand side of Figure 4). The light is then connected to the upwardly extending winglet via that fitting.

Whilst the present invention has been described and illustrated with reference to particular embodiments, it will be appreciated by those of ordinary skill in the art that the invention lends itself to many different variations not specifically illustrated herein. By way of example only, certain possible variations will now be described. The second embodiment described above uses brackets to fix the downwardly extending winglet to the upwardly extending winglet, it will be appreciated that any type of fixings may be used with the present invention. It will also be appreciated that the type of light used with the present invention may vary, as well as its position along the length of the join. For example, in some embodiments in accordance with the present invention the light may be located adjacent to the leading edge of the downwardly extending winglet.

**0040** It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A wingtip device (1,101) comprising an upwardly extending winglet (2, 102);
and a downwardly extending winglet (4, 104);
the downwardly extending winglet being connected to the upwardly extending winglet at a join (6); and
wherein the join is defined as the region at which the upwardly extending winglet and downwardly extending winglet intersect;
**CHARACTERISED IN THAT**:
the join comprises a join void, said join void being defined at least in part by the structure of the upwardly extending winglet and at least in part by the structure of the downwardly extending winglet,
wherein at least a part of an aircraft light is located within said join void such that only a portion of the housing of said aircraft light is exposed to the airflow over the wingtip device when the aircraft is in flight; and
the outermost surface of the light is substantially flush with the surface of the wingtip device.

2. A wingtip device according to claim 1, wherein the upwardly extending winglet comprises an upper surface and a lower surface, and the downwardly extending winglet is joined at a proximal end to the lower surface of the upwardly extending winglet, and wherein said at least part of the aircraft light is located in the join between the proximal end of the downwardly extending winglet and the lower surface of the upwardly extending winglet.

3. A wingtip device according to any previous claim, wherein the wingtip device comprises an aerodynamic fairing (8, 108) configured to fair at least a portion of the join and at least a portion of the aircraft light.

4. A wingtip device according to any previous claim, wherein the downwardly extending winglet is connected to the upwardly extending winglet via a first attachment feature (112a) mounted on the upwardly extending winglet, and a second attachment feature (112b) mounted on the downwardly extending winglet such that, in use, the upwardly extending winglet is connected to the downwardly extending winglet via the first and second attachment features.

5. A wingtip device according to claim 4, wherein the aircraft light is connected to the wingtip via the first and/or second attachment features.

6. A wingtip device according to claim 4, wherein the aircraft light is connected to the wingtip via a light fitting separate from the first and second attachment features.

7. A wingtip device according to any previous claim, wherein the aircraft light is mounted on the upwardly extending winglet such that at least part of the aircraft light is located in the join between the upwardly extending winglet and the downwardly extending winglet.

8. A wingtip device according to claim 7, wherein the wingtip device is configured to provide power to the aircraft light via the upwardly extending winglet.

9. A wingtip device according to any previous claim, wherein the aircraft light comprises a light source, the housing having at least one transparent region for allowing the transmission of light from the light source to the surroundings.

10. A wingtip device according to any previous claim, wherein the aircraft light is located on the outboard side of the winglet and/or at the trailing edge of the wingtip device.

11. A wingtip device according to any previous claim, wherein the light is a rear-facing light.

12. An aircraft having a wingtip device according to any previous claim.

13. A method of integrating an aircraft light (10, 110) with a wingtip device (1,101) comprising an upwardly extending winglet (2, 102);
and a downwardly extending winglet (4,104);
the downwardly extending winglet being connected to the upwardly extending winglet at a join (6); and
wherein the join is defined as the region at which the upwardly extending winglet and downwardly extending winglet intersect;
**CHARACTERISED IN THAT**:
the join comprises a join void, said join void being defined at least in part by the structure of the upwardly extending winglet and at least in part by the structure of the downwardly extending winglet,
the method comprises the step of joining the downwardly extending winglet to the upwardly extending winglet such that at least part of the aircraft light is located within said join void such that only a portion of the housing of said aircraft light is exposed to the airflow over the wingtip device when the aircraft is in flight; and
the outermost surface of the light is substantially flush with the surface of the wingtip device.

14. A method of integrating an aircraft light with a wingtip device according to claim 13, wherein the method comprises providing power to the aircraft light via the upwardly extending winglet.

15. A method of integrating an aircraft light with a wingtip device according to claim 13 or 14, wherein the method comprises leaving the aircraft light in position while the downwardly extending winglet is removed.

## Patentansprüche

1. Flügelspitzenvorrichtung (1, 101), umfassend ein sich nach oben erstreckendes Winglet (2, 102),
und ein sich nach unten erstreckendes Winglet (4, 104),
wobei das sich nach unten erstreckende Winglet mit dem sich nach oben erstreckenden Winglet an einer Verbindungsstelle (6) verbunden ist; und
wobei die Verbindungsstelle als der Bereich definiert ist, in welchem sich das nach oben und das nach unten erstreckende Winglet schneiden,
**DADURCH GEKENNZEICHNET, DASS**:
die Verbindungsstelle eine Verbindungslücke aufweist, wobei die besagte Verbindungslücke zumindest teilweise durch die Struktur des sich nach oben erstreckenden Winglets und zumindest teilweise durch die Struktur des sich nach unten erstreckenden Winglets definiert ist,
wobei sich zumindest ein Teil einer Flugzeugleuchte innerhalb der besagten Verbindungslücke befindet, sodass nur ein Abschnitt des Gehäuses der besagten Flugzeugleuchte dem Luftstrom über die Flügelspitzenvorrichtung ausgesetzt ist, wenn das Flugzeug im Flug ist, und
die äußerste Oberfläche der Leuchte im Wesentlichen bündig mit der Oberfläche der Flügelspitzenvorrichtung ist.

2. Flügelspitzenvorrichtung nach Anspruch 1, wobei das sich nach oben erstreckende Winglet eine obere Fläche und eine untere Fläche umfasst und das sich nach unten erstreckende Winglet an einem proximalen Ende mit der unteren Fläche des sich nach oben erstreckenden Winglets verbunden ist, und wobei sich der besagte zumindest eine Teil der Flugzeugleuchte in der Verbindungsstelle zwischen dem proximalen Ende des sich nach unten erstreckenden Winglets und der unteren Fläche des sich nach oben erstreckenden Winglets befindet.

3. Flügelspitzenvorrichtung nach einem der vorhergehenden Ansprüche, wobei die Flügelspitzenvorrichtung eine aerodynamische Verkleidung (8, 108) umfasst, die ausgebildet ist, zumindest einen Abschnitt der Verbindungsstelle und zumindest einen Abschnitt der Flugzeugleuchte auszukleiden.

4. Flügelspitzenvorrichtung nach einem der vorhergehenden Ansprüche, wobei das sich nach unten erstreckende Winglet mit dem sich nach oben erstreckenden Winglet über ein erstes Befestigungselement (112a) verbunden ist, das an dem sich nach oben erstreckenden Winglet angebracht ist, und ein zweites Befestigungselement (112b), das an dem sich nach unten erstreckenden Winglet so angebracht ist, dass bei der Verwendung das sich nach oben erstreckende Winglet mit dem sich nach unten erstreckenden Winglet über das erste und das zweite Befestigungselement verbunden ist.

5. Flügelspitzenvorrichtung nach Anspruch 4, wobei die Flugzeugleuchte mit der Flügelspitze über das erste und/oder zweite Befestigungselement verbunden ist.

6. Flügelspitzenvorrichtung nach Anspruch 4, wobei die Flugzeugleuchte mit der Flügelspitze über eine Leuchte verbunden ist, die von den ersten und zweiten Befestigungselementen getrennt ist.

7. Flügelspitzenvorrichtung nach einem der vorhergehenden Ansprüche, wobei die Flugzeugleuchte an dem sich nach oben erstreckenden Winglet so angebracht ist, dass sich der zumindest eine Teil der Flugzeugleuchte in der Verbindungsstelle zwischen dem sich nach oben erstreckenden Winglet und dem sich nach unten erstreckenden Winglet befindet.

8. Flügelspitzenvorrichtung nach Anspruch 7, wobei die Flügelspitzenvorrichtung ausgebildet ist, der Flugzeugleuchte über das sich nach oben erstreckende Winglet Strom zuzuführen.

9. Flügelspitzenvorrichtung nach einem der vorhergehenden Ansprüche, wobei die Flugzeugleuchte eine Lichtquelle umfasst, wobei das Gehäuse mindestens einen transparenten Bereich aufweist, um die Übertragung von Licht von der Lichtquelle zu der Umgebung zu ermöglichen.

10. Flügelspitzenvorrichtung nach einem der vorhergehenden Ansprüche, wobei die Flugzeugleuchte auf der Außenseite des Winglets und/oder an der Hinterkante der Flügelspitzenvorrichtung angeordnet ist.

11. Flügelspitzenvorrichtung nach einem der vorhergehenden Ansprüche, wobei die Leuchte eine nach hinten gerichtete Leuchte ist.

12. Flugzeug, mit einer Flügelspitzenvorrichtung gemäß einem der vorhergehenden Ansprüche.

13. Verfahren zum Integrieren einer Flugzeugleuchte (10, 110) in eine Flügelspitzenvorrichtung (1, 101), umfassend ein sich nach oben erstreckendes Winglet (2, 102),
und ein nach unten erstreckendes Winglet (4, 104),
wobei das sich nach unten erstreckende Winglet mit dem sich nach oben erstreckenden Winglet an einer Verbindungsstelle (6) verbunden ist, und
wobei die Verbindungsstelle als der Bereich definiert ist, in welchem sich das nach oben und das nach unten erstreckende Winglet schneiden,
**DADURCH GEKENNZEICHNET, DASS**:
die Verbindungsstelle eine Verbindungslücke aufweist, wobei die besagte Verbindungslücke zumindest teilweise durch die Struktur des sich nach oben erstreckenden Winglets und zumindest teilweise durch die Struktur des sich nach unten erstreckenden Winglets definiert ist,
das Verfahren den Schritt des Verbindens des sich nach unten erstreckenden Winglets mit dem sich nach oben erstreckenden Winglet umfasst, sodass sich zumindest ein Teil der Flugzeugleuchte innerhalb der besagten Verbindungslücke befindet, sodass nur ein Abschnitt des Gehäuses der besagten Flugzeugleuchte dem Luftstrom über die Flügelspitzenvorrichtung ausgesetzt ist, wenn das Flugzeug im Flug ist, und
die äußerste Oberfläche der Leuchte im Wesentlichen bündig mit der Oberfläche der Flügelspitzenvorrichtung ist.

14. Verfahren zum Integrieren einer Flugzeugleuchte in eine Flügelspitzenvorrichtung nach Anspruch 13, wobei das Verfahren das Bereitstellen von Energie für die Flugzeugleuchte über das sich nach oben erstreckende Winglet umfasst.

15. Verfahren zum Integrieren einer Flugzeugleuchte in eine Flügelspitzenvorrichtung nach Anspruch 13 oder 14, wobei das Verfahren das Belassen des Flugzeuglichts in Position umfasst, während das sich nach unten erstreckende Winglet entfernt wird.

## Revendications

1. Dispositif d'ailerette (1, 101) comprenant une ailerette qui s'étend vers le haut (2, 102) ;
et une ailerette qui s'étend vers le bas (4, 104) ;
l'ailerette qui s'étend vers le bas étant reliée à une ailerette qui s'étend vers le haut au niveau d'une jonction (6) ; et
dans lequel la jonction est définie comme la zone au niveau de laquelle l'ailerette qui s'étend vers le haut et l'ailerette qui s'étend vers le bas se croisent ;
**caractérisé en ce que** :
la jonction comprend un vide de jonction, ledit vide de jonction étant défini au moins en partie par la structure de l'ailerette qui s'étend vers le haut et au moins en partie par la structure de l'ailerette qui s'étend vers le bas,
dans lequel au moins une partie d'une lumière d'aéronef se trouve dans ledit vide de jonction de sorte que seule une partie de l'enceinte de ladite lumière d'aéronef soit exposée au flux d'air sur le dispositif d'ailerette lorsque l'aéronef est en vol ; et
la surface la plus externe de la lumière affleure sensiblement la surface du dispositif d'ailerette.

2. Dispositif d'ailerette selon la revendication 1, dans lequel l'ailerette qui s'étend vers le haut comprend une surface supérieure et une surface inférieure, et l'ailerette qui s'étend vers le bas est jointe, au niveau d'une extrémité proximale, à la surface inférieure de l'ailerette qui s'étend vers le haut, et dans lequel ladite au moins partie de la lumière d'aéronef est située dans la jonction entre l'extrémité proximale de l'ailerette qui s'étend vers le bas et la surface inférieure de l'ailerette qui s'étend vers le haut.

3. Dispositif d'ailerette selon l'une quelconque des revendications précédentes, dans lequel le dispositif d'ailerette comprend un carénage aérodynamique (8, 108) configuré pour caréner au moins une partie de la jonction et au moins une partie de la lumière d'aéronef.

4. Dispositif d'ailerette selon l'une quelconque des revendications précédentes, dans lequel l'ailerette qui s'étend vers le bas est reliée à l'ailerette qui s'étend vers le haut par un premier système de fixation (112a) monté sur l'ailerette qui s'étend vers le haut, et un second système de fixation (112b) monté sur l'ailerette qui s'étend vers le bas de sorte que, pendant l'utilisation, l'ailerette qui s'étend vers le haut soit reliée à l'ailerette qui s'étend vers le bas via le premier et le second systèmes de fixation.

5. Dispositif d'ailerette selon la revendication 4, dans lequel la lumière d'aéronef est reliée à l'ailerette via le premier et/ou le second système de fixation.

6. Dispositif d'ailerette selon la revendication 4, dans lequel la lumière d'aéronef est reliée à l'ailerette via une fixation de lumière distincte du premier et du second systèmes de fixation.

7. Dispositif d'ailerette selon l'une quelconque des revendications précédentes, dans lequel la lumière d'aéronef est montée sur l'ailerette qui s'étend vers le haut de sorte qu'au moins une partie de la lumière d'aéronef se trouve dans la jonction entre l'ailerette qui s'étend vers le haut et l'ailerette qui s'étend vers le bas.

8. Dispositif d'ailerette selon la revendication 7, dans lequel le dispositif d'ailerette est configuré pour fournir de l'énergie à la lumière d'aéronef via l'ailerette qui s'étend vers le haut.

9. Dispositif d'ailerette selon l'une quelconque des revendications précédentes, dans lequel la lumière d'aéronef comprend une source de lumière, l'enceinte ayant au moins une zone transparente destinée à permettre la transmission de la lumière entre la source de lumière et l'environnement.

10. Dispositif d'ailerette selon l'une quelconque des revendications précédentes, dans lequel la lumière d'aéronef se trouve côté extérieur de l'ailerette et/ou au niveau du bord de fuite du dispositif d'ailerette.

11. Dispositif d'ailerette selon l'une quelconque des revendications précédentes, dans lequel la lumière est une lumière tournée vers l'arrière.

12. Aéronef ayant un dispositif d'ailerette selon l'une quelconque des revendications précédentes.

13. Procédé d'intégration d'une lumière d'aéronef (10, 110) avec un dispositif d'ailerette (1, 101) comprenant une ailerette qui s'étend vers le haut (2, 102);
et une ailerette qui s'étend vers le bas (4,104);
l'ailerette qui s'étend vers le bas étant reliée à l'ailerette qui s'étend vers le haut au niveau d'une jonction (6) ; et
dans lequel la jonction est définie comme une zone au niveau de laquelle l'ailerette qui s'étend vers le haut et l'ailerette qui s'étend vers le bas se croisent ;
**caractérisé en ce que** :
la jonction comprend un vide de jonction, ledit vide de jonction étant défini au moins en partie par la structure de l'ailerette qui s'étend vers le haut et au moins en partie par la structure de l'ailerette qui s'étend vers le bas,
le procédé comprenant l'étape de jonction de l'ailerette qui s'étend vers le bas à l'ailerette qui s'étend vers le haut de sorte qu'au moins une partie de la lumière d'aéronef se trouve dans ledit vide de jonction de sorte que seule une partie de l'enceinte de ladite lumière d'aéronef soit exposée au flux d'air sur le dispositif d'ailerette lorsque l'aéronef est en vol ; et
la surface la plus externe de la lumière affleure sensiblement la surface du dispositif d'ailerette.

14. Procédé d'intégration d'une lumière d'aéronef avec un dispositif d'ailerette selon la revendication 13, dans lequel le procédé comprend le fait de fournir de l'énergie à la lumière d'aéronef via l'ailerette qui s'étend vers le haut.

15. Procédé d'intégration d'une lumière d'aéronef avec un dispositif d'ailerette selon la revendication 13 ou 14, dans lequel le procédé comprend le fait de laisser la lumière d'aéronef en position pendant que l'ailerette qui s'étend vers le bas est retirée.
